# EUROPEAN PATENT SPECIFICATION

(11) **EP 1 342 333 B1**
(45) Date of publication and mention of the grant of the patent: **07.07.2004**
(21) Application number: 01998064.8
(22) Date of filing: 17.12.2001
(51) Int. Cl.: H04K 1/00

(54) **PARTIAL ENCRYPTION OF ASSEMBLED BITSTREAMS**
TEILVERSCHLÜSSELUNG VON ZUSAMMENGESETZTEN BITSTRÖMEN
CRYPTAGE PARTIEL DE TRAINS DE BITS ASSEMBLES

(30) Priority: 15.12.2000 US 255954 P
(43) Date of publication of application: 10.09.2003
(73) Proprietor: Dolby Laboratories Licensing Corporation, San Francisco California 94103 (US)
(72) Inventor: TRUMAN, Michael, Mead, San Francisco, CA 94103 (US)
(74) Representative: Hoffmann, Eckart, Dipl.-Ing.
(86) International application number: PCT/US2001/049333
(87) International publication number: WO 2002/062008

(56) References cited:
- DE-C- 19 907 964
- US-A- 5 636 279

## Description

### TECHNICAL FIELD

The invention relates to data encryption. More particularly, the invention relates to encrypting portions of assembled data and more particularly of encoded audio or video data.

### BACKGROUND ART

Data encryption is used to securely transmit information over an insecure channel. A mathematical transformation is applied to the information in such a way that it is very difficult to undo the transformation. A key, which is just a large number, controls the encryption and decryption algorithm. A symmetric key algorithm uses the same key to encrypt and decrypt the data. An asymmetric key algorithm uses two different but related keys where one is used to encrypt and the other is used to decrypt the data.

Algorithms for data encryption tend to be computationally expensive especially on general-purpose processors that operate on words rather than single bits. The current standard DES algorithm operates in this fashion. Generally, the larger the size of the key the more computationally expensive the algorithm will be.

A secure encryption algorithm assumes that an attacker knows everything about the system except for the key that is needed to decrypt the stolen information. Under ideal conditions, the only successful attack would be an exhaustive key search, in which the attacker must apply every possible key to the entire set of encrypted data, and then analyze the decrypted result to see if it was sensible. If this is the only possible attack, the system can be made secure in practice by choosing a large enough key size (i.e., the time required to test every possible key would be impractical).

In many systems, a significant weakness can be used to reduce the time required to perform an exhaustive key search. This weakness occurs when the decrypted data is known to contain recognizable information. For example, if the encrypted data was known to be English text, statistics from the decrypted data could determine when something close to the English language was found. This would indicate a potential key. If certain words were known to exist within the decrypted text, it would be even easier to find potential keys.

In addition, it may be possible to perform a more efficient exhaustive key search if the encrypted data contains internal dependencies. If the data to be encrypted is a bitstream, and the specific values of certain bitstream elements determine the existence or size of subsequent bitstream elements, these dependencies can be exploited by an attacker. As an example, consider a frame based bitstream syntax in which the overall frame size is known, and for which one or more parameters are optionally included based on the value of other parameters. An attacker performing an exhaustive key search may find that, for a certain group of keys, the decrypted bitstream indicates the inclusion of these optional parameters, and as a result the frame size is longer than it should be (this is called an overflow condition). Such a decrypted bitstream is an "illegal" bitstream that violates the bitstream's syntax. In this case, the attacker can conclude that the correct decryption key is not in this group, which may save considerable time in completing the exhaustive search. Similar cases exist in underflow conditions, in which the decrypted syntax fails to use enough of the available bits in the frame to constitute a legal bitstream. Finally, if one or more of the parameters in a bitstream is precluded from taking on certain specific values, occurrence of these values can help an attacker rule out keys (this is called an illegal value condition and is another example of an illegal bitstream that violates the bitstream's syntax).

A possible way to make the system more robust to attacks is to hash the data before it is encrypted. A hash function randomizes the data so that statistics and keywords cannot be used to help in an attack. Several problems exist with this method. It must be assumed that the attacker knows the hash function and can undo it. In addition, the hash function uses more processing power, further increasing the computational cost. Many data reduction systems exist that block process input data such as audio and video. These systems generally structure the compressed data in a predetermined fashion. The data is broken into blocks or frames that are independently decodable over some amount of time. The frames may consist of both fixed information (*i.e.*, it is invariant from frame to frame) and variable information (*i.e.*, it changes from frame to frame). Directly encrypting all of the data in these frames leads to the , problems mentioned above, such as the large amount of processing required and the security problems with known keywords that could help an attacker determine the key. Known keywords contained within the fixed information such as sync words, data rate and other metadata change little or not at all from frame to frame and could be used to allow an attacker to devise an attack that would require less work than an exhaustive key search.

US patent 5,636,279 discloses a scramble apparatus for scrambling data including a variable length code. In one embodiment the scramble apparatus receives an MPEG encoded video signal as an input signal. The input signal is supplied to a code detecting unit that has a codebook used to reproduce each code in order to read the content of all data in the input signal. Based on the output signal of the code detecting apparatus selected portions of the input signal are scrambled. The need of a code detecting unit to decode the received bitstream prior to scrambling makes this known apparatus complex and expensive.

It is known to encrypt a variable information portion of a frame prior to assembly of the output bitstream by an encoder (German patent DE 199 07 964 C1, US patent 5,636,279). However, this approach has several disadvantages. It is complex, requiring the encryption to be applied within the encoder rather than to the assembled bitstream. This complexity renders it impractical for the case in which multiple copies of a bitstream, each encrypted with a different encryption key, are to be sent to multiple users. In addition, if the encryption is applied to data within an encoder prior to entropy encoding, such as Huffman coding, the encryption tends to defeat the entropy coder's coding advantage (encryption tends to "whiten" the data, leaving fewer redundancies in the data for the entropy coding to reduce). Thus, there remains a need for an improved data encryption method.

### DISCLOSURE OF THE INVENTION

In accordance with a first aspect of the present invention, this need is fulfilled with a method for encrypting an encoded bitstream assembled by an audio or video encoder, the assembled encoded bitstream having a syntax. Data in the assembled encoded bitstream is selected, which data is less than all of the data in the bitstream and which, if encrypted, would result in a partly-encrypted bitstream that does not violate the syntax of the assembled encoded bitstream and would render reproduced audio or video resulting from an undecrypted decoding of the parity-encrypted bitstream to be of degraded quality. The selected data in the assembled encoded bitstream is encrypted to provide the partly encrypted bitstream. The syntax is a modification of the normal syntax of the encoder for the assembled encoded bitstream when the partly-encrypted bitstream would violate the normal syntax of the assembled encoded bitstream, wherein the normal syntax is modified so that when the selected data is encrypted the resulting partly-encrypted modified bitstream does not violate the modified syntax of the assembled encoded bitstream.

System security does not necessarily require preventing an attacker from gaining some knowledge about the data that is sought to be protected. Even if some of the bitstream elements are visible in the clear, if enough of the bitstream is encrypted, it may be impossible to make meaningful use of the data without properly decrypting it. For example, audio data may be of no use if it is unintelligible or of degraded quality, even if the attacker is able to see some of the associated metadata conveyed in the bitstream.

In accordance with the present invention, security is enhanced by encrypting only a portion of an assembled bitstream rather than all of it. Encryption of elements in an assembled bitstream whose values are known or statistically likely is not preferred. Encryption of those elements with the highest entropy in the assembled bitstream is preferred. For example, if the encoder employs an entropy coding algorithm, it is preferred to encrypt at least part of the entropy-coded data portion of the assembled bitstream, such as at least part of the portion of the bitstream data that has been Huffman coded, arithmetic coded or Gain Adaptive Quantization (GAQ) coded. If the encoder does not employ an entropy-coding algorithm, then it is preferred to encrypt at least part of the highest entropy portions (*e.g.*, those portions that are not repetitive and are the least predictable) of the bitstream. Encryption of one or more elements in an assembled bitstream that would cause the resulting partially encrypted bitstream to violate the syntax of the assembled bitstream (*i.e.*, to cause an illegal bitstream by causing, for example, overflow, underflow, or illegal value conditions) is not preferred.

In order to avoid overflow or underflow conditions when encryption is applied to the entropy-encoded data portions in the assembled bitstreams produced by certain types of encoders (*e.g.*, encoders employing gain adaptive quantization), it may be necessary to modify the syntax of the encoder's bitstream in order to allow the re-ordering of data in the assembled bitstream.

With respect to other types of entropy-type encoders (*e.g.*, encoders employing Huffman coding or arithmetic coding), to avoid triggering overflow or underflow conditions, it may be necessary to modify the encoder's syntax to allow padded data to be added, for example by appending it to the end of the frame or block in which such overflow or underflow occurs.

In addition to enhancing security, the present invention reduces overall computational complexity, because fewer data words are encrypted and subsequently decrypted. The computational complexity is also reduced because the encryption is performed directly on an assembled bitstream (the multiplexed bitstream output of an encoder). This prevents having the added complexity of involving an encoder or decoder in the encryption process. An advantage of encrypting an assembled bitstream (not involving the encoder or decoder) is that separately encrypted bitstreams can be prepared for different markets and/or destinations.

Encrypting large amounts of data is computationally expensive. It would be useful if data could be encrypted at a low computational cost at the point of distribution. This would ensure that data could be personalized to a limited number of end users at any time. For example, in a Video on Demand (VOD) system a large amount of data is encrypted and distributed over a network. If this content is stored in an encrypted format, it will always have the same key to decrypt the material. Once a user acquires a decryption key, the user would always have access to the material. If it were possible to encrypt at the point of distribution, more control over the content would exist. This is possible, according to the present invention, because encryption is applied to an assembled bitstream rather than in the coding process prior to assembling the encoded bitstream.

The present invention describes how encryption can be separated from a compression systems in a way the lowers the computational cost of security. It also supports a distribution model that can use this to protect transmitted data to end-users.

### DESCRIPTION OF THE DRAWINGS

FIG. 1 is a conceptual block diagram showing generally the manner in which encryption is applied in accordance with aspects of the present invention.
FIG. 2 is a conceptual block diagram showing generally the manner in which decryption is applied in accordance with aspects of the present invention.
FIG. 3 is an idealized diagram (it is not to scale) showing the format of a typical encoded audio frame generated by a transform type encoder in which the audio data is represented by exponents and quantized mantissas.
FIG. 4 is a conceptual block diagram showing generally the manner in which encryption is applied in accordance with aspects of the present invention in which the bitstream syntax is modified.
FIG. 5 is a conceptual block diagram showing generally the manner in which decryption is applied in accordance with aspects of the present invention in which the bitstream syntax is modified.

### BEST MODE FOR CARRYING OUT THE INVENTION

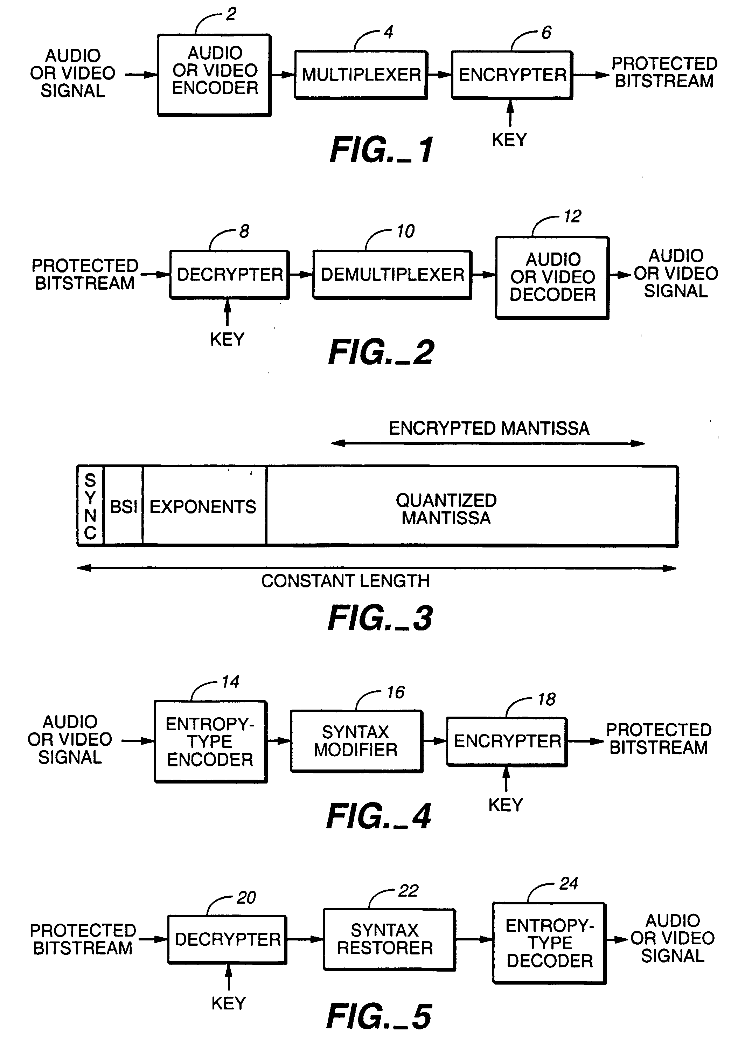

FIG. 1 is a conceptual block diagram showing generally the manner in which encryption is applied in accordance with aspects of the present invention. An audio or video signal is applied to an audio or video encoder function or process 2, the output of which is applied to a multiplexer function or process 4 that assembles an encoded bitstream in accordance with a syntax. The multiplexer function or process typically is part of the encoder function or process but is shown separately here for discussion purposes. The assembled encoded bitstream is then encrypted by an encrypter function or process 6 using a key, as discussed above. The choice of any particular encryption process is not critical to the invention. The encrypter function or process output is a protected bitstream. In the protected bitstream, less than all of the data in the bitstream is encrypted, the partly-encrypted bitstream does not violate the syntax of the assembled encoded bitstream of multiplexer 4 and would render reproduced audio or video resulting from an undecrypted decoding of the partly-encrypted bitstream to be of degraded quality. The degree of degradation depends at least on how much of the bitstream is encrypted and the encryption applied. An acceptable level of quality degradation may be determined by the user.

FIG. 2 is a conceptual block diagram showing generally the manner in which decryption is applied in accordance with aspects of the present invention. The protected bitstream is applied to a decrypter function or process 8 that also receives the same key as used by encrypter function or process 6 for encrypting the protected bitstream. The decrypted bitstream is then demultiplexed by a demultiplexer function or process 10 and applied to an audio or video decoder function or process 12 that provides a decoded audio or video signal. In the absence of a correct key applied to decrypter function or process 8, the reproduced audio or video is of degraded quality.

Aspects of the invention apply both to audio and video encoders and decoders, particularly perceptual encoders and decoders in which time domain audio or video signals are transformed into the frequency domain and frequency coefficients are quantized using perceptual models in order to reduce the amount of data in the encoder's output. A large portion of the data in a perceptual audio or video compression system is entropy-coded data. This data generally occurs in the same location in the encoded frames, at the frame rate of the compression system. In accordance with the present invention, a distribution server (a server distributing audio or video content to multiple users), for example, may encrypt only a small portion of the data in a fixed location in frames as it transmits assembled bitstreams. This would make it unnecessary for the server to parse (partially decode the bitstream to identify high-entropy portions of the bitstream) the bitstream and encrypt specific portions of the data or to decode the bitstream, encrypt it and re-encode it.

If one considers audio data reduction systems such as MPEG-AAC, Dolby E or video reduction systems such as MPEG-1, 2 and 4, all contain some type of entropy coder as part of the compression algorithm ("Dolby" is a trademark of Dolby Laboratories Licensing Corporation). An entropy coder reduces the data size by removing the redundancies in the data set. The entropy-coded data set has a 'whitened' characteristic because the processing flattens the probability density function (PDF). This data set is optimal for encryption because very little information can be inferred from this whitened data set. The entropy coder creates a similar output to that of a hashed data set.

Also of interest are other audio and video data reduction systems, such as the Dolby AC3 audio system, which do not employ entropy coding as a part of the compression algorithm, but which, nevertheless, generate bitstreams having portions that have higher entropy (*e.g.*, the quantized mantissas of the frequency coefficients) than other portions (*e.g.*, syncwords, bitstream information, and the like).

In such audio and video data reduction systems that employ entropy coding or other types of coding that generates high entropy bitstream portions, the syntax of the coding algorithm identifies the portions of the assembled data stream that are entropy coded or have high entropy. Typically, entropy coded portions or high entropy portions include scalefactors, exponents and quantized coefficients. The entropy coded or high entropy data is usually a high percentage of the assembled bitstream and is often located at the end of a frame. Because such entropy coded or high entropy portions are usually located in the same position in each frame, they are readily located for encryption and decryption, thus avoiding the complexity of parsing or decoding the bitstream in order to encrypt all or a part of them.

FIG. 3 is an idealized diagram (it is not to scale) showing the format of a typical encoded audio frame generated by a transform type encoder in which the audio data is represented by exponents and quantized mantissas (for example, Dolby AC3, which is described in more detail in the document Digital Audio Compression (AC-3) Standard. Approved 10 November 1994. (Rev 1) Annex A added 12 April 1995. (Rev 2) 13 corrigendum added 24 May 1995. (Rev 3) Annex B and C added 20 Dec 1995). In this example, each frame has a constant length (the same number of bits). Typically, each frame begins with some sync bits followed by bitstream information (BSI), exponents and quantized mantissas. The highest entropy data are the quantized mantissas at the end of the frame. Preferably, the quantized mantissas, or a portion of the quantized mantissas (as shown) are encrypted. Doing so will result in substantial degradation of the decoded bitstream unless the bitstream is properly decrypted. Less degradation results if the exponents or a portion of the exponents are encrypted (the exponents have lower entropy than the quantized mantissas). It is undesirable to encrypt the sync word or the BSI bits because they are repetitive from frame to frame or are predictable and such encryption would aid an attacker.

Ideally, in order to maximize security, the partially encrypted bitstream should not violate the encoder's syntax, but should result in an output, when decoded, of degraded quality. If the bitstream violates the encoder's syntax, then an attack is simplified - the attacker need only find a key that legalizes the bitstream syntax. If however, the bitstream syntax is legal, an attack is more difficult - the attacker need only find a key that restores the audio or video quality, a much more complex task and one that may be difficult to automate.

Encrypting some or all of a frame generated by some encoders may result in an illegal bitstream, a bitstream that violates the syntax of the encoder. Such a bitstream would not be "decodable" by a decoder that expects a bitstream in accordance with the encoder's syntax, which would simplify the task of an attacker, as mentioned just above. For example, some entropy-coded data (*e.g.*, Huffman-encoded data) contain backward dependencies that are broken by encryption. Such broken dependencies cause the decoding algorithm to finish decoding the frame before the end of the frame or to continue decoding past the end of the frame. These are overflow and underflow conditions that would indicate to an attacker that it does not have the correct key, which would significantly simplify an attack. The system is more secure if the attacker is forced to use other means to determine if it has the correct key, such as searching for a key that restores degraded audio or video.

Overcoming the problem of encrypting entropy-coded data requires a modification of the bitstream data, for example, bitstream re-ordering or the addition of padded data, and, consequently, a modification of the bitstream syntax. FIG. 4 shows generally how this may be accomplished. An audio or video signal is applied to a standard entropy-type encoder function or process 14. The assembled encoded bitstream produced by encoder function or process 14 is applied to a syntax modifier function or process 16. An encrypter function or process 18, in accordance with an applied key, then encrypts the bitstream, modifying the bitstream so that the modified bitstream is in accordance with the modified syntax to produce the protected bitstream. In practice, the functions of syntax modifier function or process 16 and encrypter function or process 18 may be closely interrelated. They are shown as separate functions for explanatory purposes. As shown in FIG. 5, the protected bitstream is applied to a decrypter function or process 20, which receives the same key as encrypter function or process 18. The decrypter function or process 20 also restores the modified bitstream to its unmodified state (as it was produced by the entropy-type encoder 14). A syntax restorer function or process 22 restores the original syntax of the bitstream produced by the entropy-type encoder function or process 14. As in the case of functions 16 and 18 of FIG. 3, in practice, the functions of decrypter function or process 20 and syntax restorer function or process 22 may be closely interrelated or combined and are shown as separate functions for explanatory purposes. The restored bitstream having its original syntax is applied to a standard entropy-type decoder function or process 24, which provides a decoded audio or video signal.

### Huffman Coding

Huffman coding is an example of an entropy-type coding that cannot be conventionally encrypted without affecting the legality of the resulting bitstream. This type of entropy coding generates uniquely decodable symbols based on the probabilities of occurrence of each symbol. The following table shows an example set of symbols, probabilities for the symbols and two sets of possible Huffman codes. Note that any combination of code words is uniquely decodable.

| Symbol | Probability | Code Word 1 | Code Word 2 |
|---|---|---|---|
| 0 | 0.4 | 1 | 00 |
| 1 | 0.2 | 01 | 10 |
| 2 | 0.2 | 000 | 11 |
| 3 | 0.1 | 0010 | 010 |
| 4 | 0.1 | 0011 | 011 |

In practical implementations of Huffman coding, multiple sets of precalculated Huffman codes are fixed in the encoder and decoder so that these codebooks do not have to be included in the compressed bitstream. The encoder chooses the codebook that provides the largest coding gain. The problem with conventionally encrypting the Huffman data is that the encrypted data will not properly decode (*i.e.* it results in an illegal bitstream), thus giving useful information to an attacker.

The following example shows, in the second line of the table, the encoded output of the Huffman coded symbols 0,1,2,3,4 using 'Code Word 1' from the above table. For clarity in this example, a space is shown between each of the encoded symbols in line 2. Line 3 shows the encoded output with no spaces. A simple encryption technique of inverting each bit is applied to the data and the corresponding output is shown in the fourth line of the table. Line 5 shows the flipped-bit-encrypted data but parsed and spaced in groups of the Code Word set 1 code words. The last line shows the output symbols corresponding to each code word in the fifth line. Thus code "01" results in an output of "1" and code word "1" results in an output of "0."

| | |
|---|---|
| 1) Input Symbols | 0, 1, 2, 3, 4 |
| 2) Huffman Encoded output | 1 01 000 0010 0011 |
| 3) Huffman Encoded output | 10100000100011 |
| 4) Encrypted output (Bit flipper) | 01011111011100 |
| 5) Encrypted output (Bit flipper) | 01 01 1 1 1 1 01 1 1 00 |
| 6) Decoded Output Symbols | 1, 1, 0, 0, 0 |
| 7) Decoded Output Symbols (with assumed padding) | 1, 1, 0, 0, 0, 0, 1, 0, 0, ? |

An attacker with knowledge of the number of input symbols (it is assumed that an attacker would have such knowledge), but who does not have the correct decryption key, would obtain the incorrect decoded output symbols shown in line 6. The attacker would note that there are unallocated encrypted output symbols (line 5) but would likely assume that padding bits had been added to the Huffman encoded output (line 3) before encryption. Thus, an attacker who assumes padding would obtain the decoded output symbols shown in line 7 (although the attacker would likely ignore that extended output if it was assuming padding had occurred and knew there was supposed to be only five symbols. However, in this example, no random padding bits were added to the Huffman encoded output of line 3. If padding bits had been added, there would have been even more additional decoded output signals. Either way, the attacker finds an illegal bitstream but obtains no information useful in the attack. However, as explained further below, it is desirable to add padding bits to the Huffman encoded output in order to make an attack more difficult when there would be underflow in the absence of padding bits.

In the above example and the following example that the extraneous bits at the end of the encrypted outputs (yielding the "?" decoded symbols) are of no concern because in practical systems the bit allocation process rarely allocates exactly, so there are always a few remaining bits.

The following example illustrates that adding padding bits provides protection against attackers for underflow conditions.

| | |
|---|---|
| 1) Input Symbols | 0, 0, 1, 1, 4, 1 |
| 2) Huffman Encoded output | 1 1 01 1 0011 01 |
| 3) Huffman Encoded output | 11011001101 |
| 4) Encrypted output (Bit flipper) | 00100110010 |
| 5) Encrypted output (Bit flipper) | 0010 01 1 0010 |
| 6) Decoded Output Symbols | 3, 1, 0, 3 |
| 7) Encrypted output (Bit flipper) w/ padding | 001001100101010 |
| 8) Encrypted output (Bit flipper) w/ padding | 0010 01 1 0010 1 01 0 |
| 9) Decoded Output Symbols w/ padding | 3, 1, 0, 3, 0, 1, ? |

In this underflow example, the random bits "1010" are added to the encrypted output. Consequently, there are six input symbols and six output symbols (without padding there would have been only four output symbols). Thus, the four-bit padding prevents an underflow, which would have provided useful information to an attacker.

### Gain Adaptive Quantization

Gain adaptive quantization is a type of entropy coding; different from Huffman-type entropy coding that limits the variable code word length to two different states. Gain adaptive quantization is described in U.S. Patent 6,246,345 by Davidson, Grant; Robinson, Charles; Truman, Michael, entitled "Using Gain Adaptive Quantization and Non-Uniform Symbol Lengths for Improved Audio Coding," which patent is incorporated by reference herein in its entirety.

Gain adaptive quantization divides a set of numbers into two groups. One group contains smaller numbers, which require fewer digits to express the required resolution, while the other group contains the remaining larger numbers. The coding efficiency is derived from the fact that the smaller numbers occur more frequently, which creates a skewed distribution.

There exists several possible ways of formatting this type of data into an output stream. One possible method places each element in order into the stream. Generally, the elements are from the small set, thus an escape code is used to indicate the presence of an element from the large set. The following example stream shows a mixed group of small (**S**) and large (**L**) numbers with escape codes (**E**):

### SSSSELSSELSSSS

S numbers and E numbers have the same number of bits (for a particular perceptual model bit allocation) but can be differentiated by their bit patterns. There are a fixed number of S and E numbers ― one for each frequency coefficient (the encoder employing GAQ is a transform coder in which frequency coefficients are quantized). Although the L numbers are all of the same length (for a particular perceptual model bit allocation), there are a variable number of L numbers, leading to a variable bitstream length and, consequently, an illegal bitstream when the stream is encrypted (*i.e.*, an underflow condition). One way to overcome the problem is to reorder the data stream by locating the large (L) numbers at the end of the stream:

### SSSSESSESSSS LL

In this reordered data stream example, there are two groups of code words - the small numbers and escape codes are one, and the large numbers are another. Each group contains internal elements that are the same length. Only the large number group can be encrypted without the variable-length coding problem discussed above. The first set of small numbers and escape codes contains useful information to an attacker because the number of escape codes indicates the number of elements in the large group. An illegal syntax causing an underflow could occur when the encrypted set of small numbers and escape codes are decoded without the correct key. Encrypting only the large set would significantly impair the quality of the output signal without the proper key. Another possible re-ordering removes the escape codes from the small group. These codes are then placed in yet a different group to indicate the proper location of a large number. This would allow the small group to be encrypted without any fixed codes (escape codes). However, it would have the disadvantage of having to modify the bitstream syntax in the manner of FIGS. 3 and 4, described above. For example, starting from the last example, above, the "5^{th}" and "8^{th}" elements indicate the positions in the S code words in which the L code words should be placed:

### 5^{th} 8^{th} SSSSSSSSSS LL

It should be understood that implementation of other variations and modifications of the invention and its various aspects will be apparent to those skilled in the art, and that the invention is not limited by these specific embodiments described. It is therefore contemplated to cover by the present invention any and all modifications, variations, or equivalents that fall within the true spirit and scope of the basic underlying principles disclosed and claimed herein.

The present invention and its various aspects may be implemented as software functions performed in digital signal processors, programmed general-purpose digital computers, and/or special purpose digital computers. Interfaces between analog and digital signal streams may be performed in appropriate hardware and/or as functions in software and/or firmware.

## Claims

1. A method for partly encrypting an encoded bitstream assembled by an audio or video encoder, the assembled encoded bitstream having a syntax, wherein said syntax is a modification of the normal syntax of the encoder for said assembled encoded bitstream when a partly-encrypted bitstream would violate the normal syntax of the assembled encoded bitstream, comprising
selecting data in the assembled encoded bitstream without decoding any portion of the assembled bitstream, which data is less than all of the data in the bitstream and which, if encrypted, would result in a partly-encrypted bitstream that does not violate the modified syntax of the assembled encoded bitstream and would render reproduced audio or video resulting from an undecrypted decoding of the partly-encrypted bitstream to be of degraded quality, and
encrypting the selected data in the assembled encoded bitstream to provide said partly encrypted bitstream.

2. A method according to claim 1 wherein the audio or video encoder employs a Huffman coding algorithm and wherein said syntax is modified by adding padding bits to the bitstream.

3. A method according to claim 1 wherein the audio or video encoder employs a gain adaptive-quantization coding algorithm and wherein said syntax is modified by reordering bits in the bitstream.

4. A method according to claim 1 wherein the data in said assembled encoded bitstream is arranged in successive frames and wherein said selecting data in the assembled encoded bitstream selects some of the data in one or more frames.

5. The method according to claim 1 wherein the selected data includes at least part of the data in the assembled encoded bitstream having the highest entropy.

6. The method according to claim 1 wherein the audio or video encoder is a perceptual encoder such that the assembled encoded bitstream data includes quantized frequency coefficients of a frequency-domain representation of the encoded audio or video and wherein the selected data includes at least part of the data constituting said quantized frequency coefficients.

7. The method according to claim 1 wherein the audio or video encoder is an entropy-coder type encoder such that the assembled encoded bitstream data includes entropy coded data comprised of variable length code words and wherein the selected data includes at least part of the data constituting said entropy coded data.

## Patentansprüche

1. Verfahren zum teilweisen Verschlüsseln eines kodierten Bitstroms, der von einem Audiooder Videokodierer zusammengesetzt ist und als zusammengesetzter, kodierter Bitstrom eine Syntax hat, die dann eine Abwandlung der normalen Syntax des Kodierers für den zusammengesetzten, kodierten Bitstrom ist, wenn ein teilweise verschlüsselter Bitstrom die normale Syntax des zusammengesetzten, kodierten Bitstroms verletzen würde, aufweisend:
Auswählen von Daten in dem zusammengesetzten kodierten Bitstrom ohne Dekodieren irgendeines Bereiches des zusammengesetzten Bitstroms, wobei die Daten weniger als sämtliche Daten im Bitstrom sind und, falls verschlüsselt, zu einem teilweise verschlüsselten Bitstrom führen würden, der die abgewandelte Syntax des zusammengesetzten, kodierten Bitstroms nicht verletzt, und dazu führen würden, daß durch nichtentschlüsseltes Dekodieren des teilweise verschlüsselten Bitstroms wiederhergestellte Audio- oder Videodaten verschlechterte Qualität hätten, und
Verschlüsseln der ausgewählten Daten im zusammengesetzten kodierten Bitstrom zur Schaffung des teilweise verschlüsselten Bitstroms.

2. Verfahren nach Anspruch 1, bei dem der Audio- oder Videokodierer einen Huffman-Kodieralgorithmus anwendet, und bei dem die Syntax durch Hinzufügen von Auffüllbits zum Bitstrom abgewandelt wird.

3. Verfahren nach Anspruch 1, bei dem der Audio- oder Videokodierer einen verstärkungsadaptiven Quantisierungs-Kodieralgorithmus anwendet, und bei dem die Syntax durch Neuanordnen von Bits im Bitstrom abgewandelt wird.

4. Verfahren nach Anspruch 1, bei dem die Daten in dem zusammengesetzten kodierten Bitstrom in aufeinanderfolgenden Rahmen angeordnet werden, und bei dem mit dem Auswählen der Daten in dem zusammengesetzten, kodierten Bitstrom einige der Daten in einem oder mehr Rahmen ausgewählt werden.

5. Verfahren nach Anspruch 1, bei dem die ausgewählten Daten mindestens einen Teil der Daten in dem zusammengesetzten kodierten Bitstrom umfassen, die die höchste Entropie haben.

6. Verfahren nach Anspruch 1, bei dem der Audio- oder Videokodierer ein perzeptueller Kodierer ist, so daß die Daten im zusammengesetzten kodierten Bitstrom quantisierte Frequenzkoeffizienten einer Darstellung der kodierten Audio- oder Videodaten in der Frequenzdomäne umfassen, und bei dem die ausgewählten Daten mindestens einen Teil der Daten umfassen, die die quantisierten Frequenzkoeffizienten bilden.

7. Verfahren nach Anspruch 1, bei dem der Audio- oder Videokodierer ein Kodierer des Entropiekodiertyps ist, so daß die Daten im zusammengesetzten, kodierten Bitstrom entropiekodierte Daten umfassen, die Codewörter veränderlicher Länge aufweisen, und bei dem die ausgewählten Daten mindestens einen Teil der Daten umfassen, die die entropiekodierten Daten bilden.

## Revendications

1. Procédé permettant de crypter en partie un flot binaire codé assemblé par un codeur audio ou vidéo, le flot codé assemblé ayant une syntaxe, dans lequel ladite syntaxe est une modification de la syntaxe normale du codeur pour ledit flot binaire codé assemblé quand le flot binaire en partie crypté viole la syntaxe normale du flot binaire codé assemblé, comprenant les étapes consistant à :
sélectionner des données dans un flot binaire codé assemblé sans décoder aucune partie du flot binaire assemblé, lesquelles données sont moins importantes que l'ensemble des données dans le flot binaire et, si elles sont cryptées, permettent d'obtenir un flot binaire en partie crypté qui ne viole pas la syntaxe modifiée du flot binaire codé assemblé et détériore la qualité de l'audio ou vidéo reproduite résultant d'un décodage non décrypté du flot binaire en partie crypté, et
crypter les données sélectionnées dans le flot binaire assemblé pour obtenir le flot binaire en partie crypté.

2. Procédé selon la revendication 1, dans lequel le codeur audio ou vidéo utilise un algorithme de codage Huffman, et dans lequel ladite syntaxe est modifiée en ajoutant des bits de remplissage au flot binaire.

3. Procédé selon la revendication 1, dans lequel le codeur audio ou vidéo utilise un algorithme de codage à quantification adaptative du gain, et dans lequel ladite syntaxe est modifiée en réorganisant les bits dans le flot binaire.

4. Procédé selon la revendication 1, dans lequel les données dans ledit flot binaire codé assemblé sont agencées en trames successives, et dans lequel ladite sélection de données dans le flot binaire codé assemblé sélectionne certaines des données dans une ou plusieurs trames.

5. Procédé selon la revendication 1, dans lequel les données sélectionnées incluent au moins une fraction des données dans le flot binaire codé assemblé présentant l'entropie la plus élevée.

6. Procédé selon la revendication 1, dans lequel le codeur audio ou vidéo est un codeur perceptuel, de telle sorte que les données du flot binaire codé assemblé incluent des coefficients de fréquence quantifiés d'une représentation de fréquence de domaine de l'audio ou vidéo codée, et dans lequel les données sélectionnées incluent au moins une fraction des données constituant lesdits coefficients de fréquence quantifiés.

7. Procédé selon la figure 1, dans lequel le codeur audio ou vidéo est un codeur de type entropie, de telle sorte que les données du flot binaire codé assemblé incluent des données codées par entropie composées de mots code de longueur variable, et dans lequel les données sélectionnées incluent au moins une fraction des données constituant lesdites données codées par entropie.
